Europäisches Patentamt

European Patent Office

Office européen des brevets

(11) Veröffentlichungsnummer: **0 142 778**
**B1**

(12) **EUROPÄISCHE PATENTSCHRIFT**

(45) Veröffentlichungstag der Patentschrift:
14.10.87

(51) Int. Cl.⁴: **G 21 C 3/32, F 16 B 41/00**

(21) Anmeldenummer: **84113451.3**

(22) Anmeldetag: **07.11.84**

(54) **Kernreaktorbrennelement.**

(30) Priorität: **21.11.83 DE 3341966**

(43) Veröffentlichungstag der Anmeldung:
**29.05.85 Patentblatt 85/22**

(45) Bekanntmachung des Hinweises auf die Patenterteilung:
**14.10.87 Patentblatt 87/42**

(84) Benannte Vertragsstaaten:
**AT DE SE**

(56) Entgegenhaltungen:
**DE-A-2 430 642**
**DE-A-2 824 265**
**FR-A-1 406 217**
**FR-A-2 202 552**
**GB-A-417 895**
**GB-A-1 179 036**
**US-A-4 219 386**

(73) Patentinhaber: **Siemens Aktiengesellschaft Berlin
und München, Wittelsbacherplatz 2, D-8000
München 2 (DE)**

(72) Erfinder: **Lippert, Hans- Joachim, Am Galgenberg
17, D-8552 Höchstadt (DE)**

**Beschreibung**

Die Erfindung betrifft ein Kernreaktorbrennelement mit Brennstäben, die Kernbrennstoff enthalten, die in Durchführungen in einer Kopfplatte geführt sind und von denen zumindest ein Teil in diesen Durchführungen befestigt ist, sowie mit einem Brennelementkasten, in dem die Brennstäbe angeordnet sind, der mit einem innen in einer Ecke an seinem Oberende befindlichen Quersteg auf einem auf der Oberseite der Kopfplatte stehenden Eckbolzen aufliegt und der zusammen mit einem dem Brennelementkasten angepaßten Winkelteil, das außen an zwei Seiten des Brennelementkastens je mit einer sich in Kastenlängsrichtung erstreckenden Blattfeder versehen ist, an diesem Eckbolzen mit einem einen Dehnungsschaft mit verringertem Durchmesser aufweisenden Schraubbolzen festgeschraubt ist, der mittels eines Bolzenkopfes an der Oberseite des Winkelteiles und eines Haltekörpers unverlierbar dem Winkelteil zugeordnet ist.

Ein derartiges Kernreaktorbrennelement ist aus der DE-A-28 24 265 bekannt. Der Haltekörper befindet sich an der Unterseite des Winkelteiles dieses bekannten Kernreaktorbrennelementes und ist ein in einer Querbohrung des Schraubbolzens angeordneter Zylinderstift, der mit einem Schweißpunkt am Schraubbolzen gegen Herausfallen aus der Querbohrung gesichert ist.

An der Stelle der Querbohrung ist der Querschnitt des Schraubbolzens reduziert. Ferner ist dort durch den Schweißpunkt der Werkstoff des Schraubbolzens sensibilisiert. Deshalb kann es vorkommen, daß der Schraubbolzen nicht an dem dafür vorgesehenen Dehnungsschaft mit verringertem Durchmesser, sondern an der Querbohrung reißt, wenn beispielsweise beim Einsetzen des Kernreaktorbrennelementes in einen Siedewasserkernreaktor Dehnungskräfte in Längsrichtung auf den Schraubbolzen einwirken.

Der Erfindung liegt die Aufgabe zugrunde, das bekannte Kernreaktorbrennelement weiterzubilden und zu gewährleisten, daß der Schraubbolzen bei zu großen Dehnungskräften stets am dafür vorgesehenen Dehnungsschaft mit verringertem Durchmesser und nirgendwo anders reißt.

Zur Lösung dieser Aufgabe ist ein Kernreaktorbrennelement der eingangs erwähnten Art erfindsngsgemäß dadurch gekennzeichnet, daß der Bolzenkopf eine Verengungsstelle aufweist, die durch einen koaxialen Bolzenkopfschaft mit verringertem Durchmesser gebildet ist und die sich in einer Bohrung im Winkelteil zwischen den beiden Enden des Bolzenkopfes befindet, und daß der Haltekörper ein zwischen die beiden Enden des Bolzenkopfes in dessen Verengungsstelle greifender Querstift ist, der in dieser Bohrung am Winkelteil befestigt ist.

Auf diese Weise ist sichergestellt, daß der Schraubbolzen nur am Dehnungsschaft reißt, wenn die Dehnungskräfte im Schraubbolzen zu groß werden, während die Verengungsstelle des Bolzenkopfes, d.h. der Bolzenkopfschaft mit verringertem Durchmesser von diesen Dehnungskräften überhaupt nicht beansprucht wird. Der Querstift verhindert so, daß sich die Bruchteile des Schraubbolzens beim Reißen des Dehnungsschaftes vom Kernreaktorbrennelement lösen können.

Dadurch können sich entweder beim Reißen des Dehnungaschaftes der Schraubbolzen noch bei Bruch des Federringes Bruchteile des letzteren vom Kernreaktorbrennelement lösen. Trotzdem ist aber der Schraubbolzen um seine Längshachse drehbar.

Aus der DE-A-24 30 642 ist ein Gehäusesockel eines Elektrizitätszählers mit einem Gehäusedeckel bekannt, der mit einem Schraubbolzen mit dem Gehäusesockel verschraubt ist. Dieser Schraubbolzen weist zwar eine Schwächungstelle, an der der Schraubbolzen bei mechanischen Spannungen brechen soll, und getrennt von dieser Schwächungstelle eine Kerbe auf, in welche eine am Gehäusedeckel abgestützte Haltescheibe greift, diese Kerbe befindet sich jedoch nicht zwischen den bei den Enden des Bolzenkopfes, dessen Unterende notwendigerweise durch seine Abstützstelle am Gehäusedeckel bestimmt ist, sondern genauso wie die Schwächungstelle im am Unterende des Bolzenkopfes ausgebildeten Schaft des Schraubbolzens. Mechanische Spannungen können daher auch dazu führen, daß dieser Schaft nicht an der dafür vorgesehenen Schwächungstelle reißt, sondern an der Kerbe, so daß der Bolzenkopf und die Haltescheibe nicht mehr gegen Herausfallen aus dem Gehäusedeckel gesichert sind.

Die Erfindung und ihre Vorteile seien anhand der Zeichnung an einem Ausführungsbeispiel näher erläutert:

Fig. 1 zeigt einen Längsschnitt eines Winkelteiles für ein erfindungsgemäßes Kernreaktorbrennelement entsprechend der strichpunktierten Linie I-I in Fig. 2.

Fig. 2 zeigt eine Draufsicht auf das Winkelteil nach Fig. 1.

Fig. 3 zeigt teilweise im Löngsschnitt den oberen Teil eines erfindungsgemäßen Kernreaktorbrennelementes.

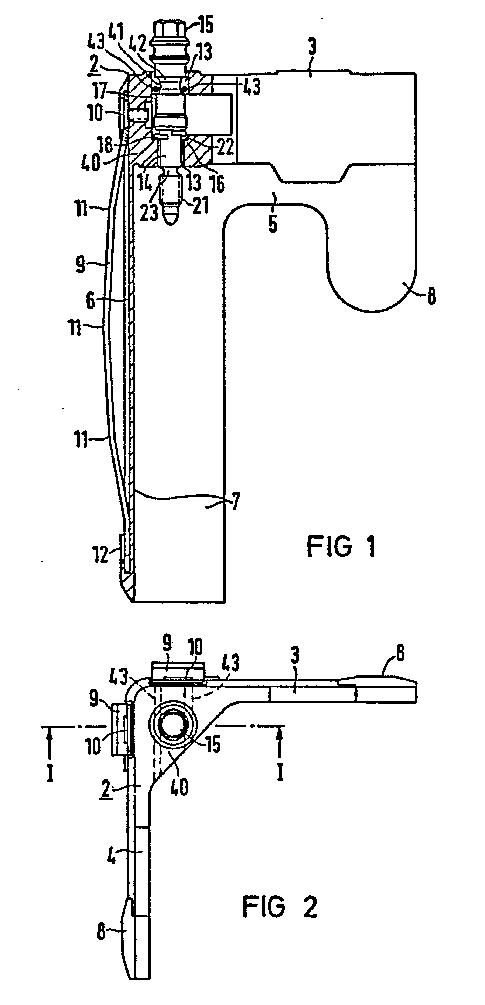

Wie die Fig. 1 und 2 zeigen, weist das Winkelteil 2 zwei zueinander rechtwinklige, gleich langt Schenkel 3 und 4 auf. An der gleichen Seite dieser Schenkel 3 und 4 befinden sich Wandungen 3 und 6, die in einem Scheitelsteg 40 der Schenkel 3 und 4 zueinander und zui Scheitelsteg 40 rechtwinklig sind. Die Wandungen 5 und 6 bilden im Scheitelsteg 40 ein zu den Schenkeln 3 und 4 rechtwinkliges langgestrecktes L-Profil 7, während sie an den Enden der Schenkel 3 und 4 zu einen starren, sich nach außen erhebenden Anlagenoppen 8 ausgeformt sind.

Außen am L-förmigen Profil 7 ist auf beiden Wandungen 5 und 6 je eine langgestreckte Blattfeder 9 in Richtung des L-Profils 7 angeordnet und jeweils an einem Ende mit einer Schraube 10 am Winkelteil 2 am Oberende des L-förmigen Profils 7 starr befestigt. Das andere Ende der Blattfeder 9 ist jeweils frei gleitend in einer Kulisse 12 an der Außenseite des L-Profils 7 an dessen Unterende geführt. Die Blattfedern 9 sind in drei Querlinien 11 so geknickt, daß sich diese Blattfedern 9 nach außen von der außenseite des L-Profils 7 wegwölben.

Im Scheitelsteg 40 der Schenkel 3 und 4 befindet sich ferner eine zu den beiden Schenkeln 3 und 4 rechtwinklige, d.h. zu den Wandungen 5 und 6 parallele durchgehende Bohrung 13, in der sich ein Schraubbolzen 14 verschiebbar und um seine Längsachse drehbar befindet und die an der Unterseite des Winkelteiles 2 einen kleineren Durchmesser als an der Oberseite hat und dadurch eine Schulter 16 ausbildet. An dem einen Ende an der Oberseite des Winkelteiles 2 weist dieser Schraubbolzen 14 einen Bolzenkopf 15 auf, der einen größeren Durchmesser als die Bohrung 13 an der Schulter 16 hat und dem die Schulter 16 in der Durchführung 13 zum Abstützen zugeordnet ist. Zwischen dem Bolzenkopf 15 und der Schulter 16 in der Bohrung 13 des Winkelteiles 2 befindet sich lose auf dem Schraubbolzen 14 noch ein in längsrichtung des Schraubbolzens 14 federnder Federring 18, für den in der Schulter 16 eine Aussenkung 22 vorgesehen ist.

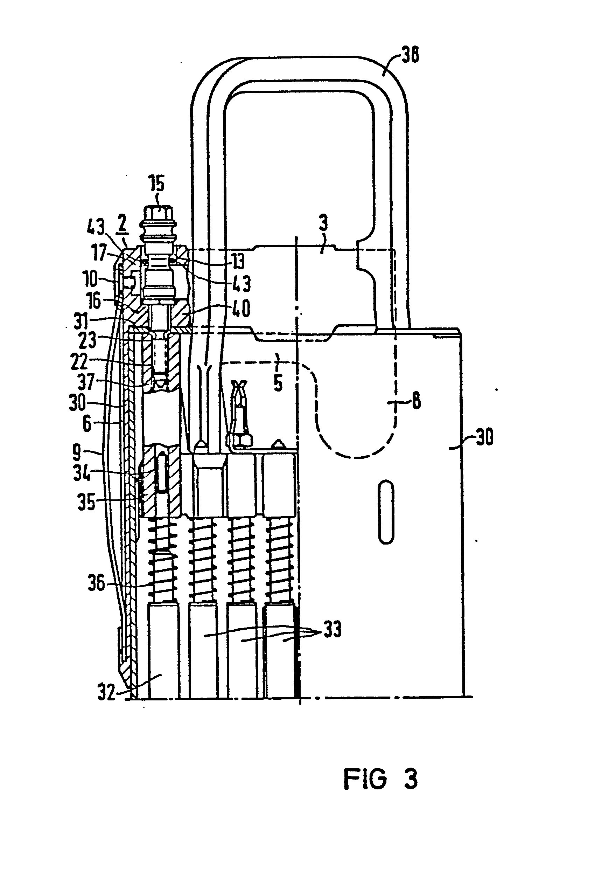

Der Schraubbolzen 14 selbst ist am anderen Ende an der Unterseite des Winkelteiles 2 mit einem Gewinde 21 versehen. Zwischen dem Gewinde 21 und dem Bolzenkopf 15 befindet sich ein Dehnungsschaft 23 mit verringertem Durchmesser. Das Gewinde 21 des Schraubbolzens 14 kann mit einem Eckbolzen auf der Oberseite der Kopfplatte des Kernreaktorbrennelements nach Fig. 3 verschraubt werden.

Der Bolzenkopf 15 weist ferner zwischen seinen beiden Enden eine Verengungsstelle 41 auf, die durch einen koaxialen Bolzenkopfschaft 42 mit verringertem Durchmesser gebildet ist und die sich in der Durchführung 13 im Winkelteil 2 an dessen Oberseite befindet. Im Winkelteil 2 sind zwei zueinander parallele Querstifte 43 mit Abstand voneinander geführt und befestigt, die auch quer durch die Bohrung 13 an der Oberseite des Winkelteiles 2 verlaufen und sich in einer gemeinsamen Ebene befinden, die rechtwinklig zur Längsachse des Schraubbolzens 14 ist. Einerseits befindet sich der Bolzenkopfschaft 42 zwischen den beiden Querstiften 43, andererseits befinden sich diese Querstifte 43 zwischen den beiden Enden des Bolzenkopfes 15 an dessen Verengungsstelle 41. Dort verhindern sie als Haltekörper für den Schraubbolzen 14, daß der Bolzenkopf 15 aus der Bohrung 13 in Richtung seiner Längsachse zur Oberseite des Winkelteiles 2 hin hinausgleiten kann, indem sie einen Anschlag für das Ende des Bolzenkopfes 15 mit dem Schraubbolzen 14 an der Unterseite des Winkelteiles 2 bilden. Der Bolzenkopfschaft 42 ist aber auch so lang ausgeführt, daß die beiden Querstifte 43 dem Bolzenkopf 15 genügend Spiel gewähren, so daß er bei eingedrücktem Federring 18 mit einem Ende satt an der Schulter 16 anliegen kann, wenn das andere Ende des Bolzenkopfes 15 größeren Durchmesser als der Bolzenkopfschaft 42 hat.

Wie Fig. 3 zeigt, in der gleiche Teile mit den gleichen Bezugzeichen wie in den Fig. 1 und 2 versehen sind, weist das Kernreaktorbrennelement für einen Siedewasserkernreaktor einen langgestreckten quadratischen Brennelementkasten 30 auf, der an seinem Oberende in einer Ecke innen mit einem Quersteg 31 versehen ist. Innerhalb dieses Brennelementkastens 30 sind mit Kernbrennstoff gefüllte Brennstäbe 32 und 33 mit zur Längsrichtung des Brennelementkastens 30 parallelen Längsachsen nebeneinander angeordnet. Die Oberenden der Brennstäbe 32, die benachbart zu der Innenseite des Brennelementkastens 30 sind, sind durch Durchführungen 34 in einer Kopfplatte 35 innerhalb des Brennelementkastens 30 geführt und in diesen Durchführungen 34 verschraubt. Die Oberenden anderer mit Kernbrennstoff gefüllter Brennstäbe 33 sind nur lose in Durchführungen in der Kopfplatte 35 geführt. Alle Brennstäbe 32 und 33 sind gegen die Kopfplatte 35 mit Schraubenfedern 36 abgestützt. In gleicher Weise sind die Unterenden der Brennstäbe 32 und 33 in Durchführungen in einer in Fig. 3 nicht dargestellten Fußplatte innerhalb des Brennelementkastens 30 geführt und im Falle der Brennstäbe 32 auch festgeschraubt.

Auf der Oberseite der Kopfplatte 35 steht in einer Ecke des Brennelementkastens 30 ein Eckbolzen 37 mit zur Längsrichtung des Brennelementkastens 30 und den Längsachsen der Brennstäbe 32 und 33 paralleler Längsachse auf dem Oberende dieses Eckbolzens 37 liegt der Quersteg 31 auf, der sich innen in einer Ecke des Brennelementkastens 30 befindet. Außen auf diesem Quersteg 31 liegt der Scheitelsteg 40 des Winkelteiles 2 so auf, daß der Brennelementkasten 30 mit seiner Kante zwischen den Wandungen 5 und 6 des Winkelteiles 2 und insbesondere im L-Profil 7 spielfrei eingepaßt ist.

Der Schraubbolzen 14 greift durch eine Durchführung im Quersteg 31 und ist mit dem Gewindeteil 22 in einer Gewindebohrung im Eckbolzen 37 festgeschraubt.

Auf der Oberseite der Kopfplatte 35 ist noch ein Bügelgriff 38 für den Greifer einer Brennelement-Lademaschine angeordnet.

In einem Siedewasserkernreaktor werden, wie auch in deutschen Offenlegungsschriften der DE-A-28 24 265 und der DE-A-30 27 562 beschrieben ist, jeweils vier Kernreaktorbrennelemente entsprechend Fig. 3 in einer quadratischen Gittermasche eines Quergitters, des sogenannten oberen Kerngitters, angeordnet. Jedes dieser vier Brennelemente befindet sich so in einer Ecke dieser Masche, daß sich die Ecken der Brennelementkästen 30 mit den Winkelteilen 2 im Zentrum der Masche befinden und sich dort jeweils zwei Blattfedern 9 seitlich benachbarter Kernreaktorbrennelemente gegeneinander abstützen. Die Brennelementkästen der vier in derselben Masche des Kerngitters befindlichen Kernreaktorbrennelemente bilden einen spaltförmigen Zwischenraum mit kreuzförmigem Querschnitt, in den ein langgestreckter Steuerstab mit ebenfalls kreuzförmigem Querschnitt von den Unterenden dieser vier Kernreaktorbrennelemente her eingeschoben wird.

Beim Be- und Entladen der vier Kernreaktorbrennelemente in die bzw. aus der Masche des Kerngitters auf den Schraubbolzen 14 in Längsrichtung einwirkende, einen Grenzwert übersteigende Dehnungskräfte können allenfalls dazu führen, daß der Schraubbolzen 14 am dafür vorgesehenen Dehnungsschaft 23 mit geringerem Durchmesser zwischen dem Gewinde 21 und dem Bolzenkopf 15 reißt, so daß in diesem Fall kein loses Bolzenteil in den spaltförmigen Zwischenraum zwischen den Brennelementkästen gelangt und dort den Steuerstab behindert, da das Gewinde 21 im Eckbolzen 37 verschraubt bleibt, während der Rest des Schraubbolzens 14 einschließlich des Federringes 18 aufgrund der einen Anschlag für den Bolzenkopf 15 bildenden Querstifte 43 bzw. der Aussenkung 22 für den Federring 18 nach wie vor unverlierbar am Winkelteil 2 gehalten bleiben.

### Patentansprüche

1. Kernreaktorbrennelement mit Brennstäben, die Kernbrennstoff enthalten, die in Durchführungen in einer Kopfplatte geführt sind und von denen zumindest ein Teil in diesen Durchführungen befestigt ist, sowie mit einem Brennelementkasten, in dem die Brennstäbe angeordnet sind, der mit einem innen in einer Ecke an seinem Oberende befindlichen Quersteg auf einem auf der Oberseite der Kopfplatte stehenden Eckbolzen aufliegt und der zusammen mit einem dem Brennelementkasten angepaßten Winkelteil, das außen an zwei Seiten des Brennelementkastens je mit einer sich in Kastenlängsrichtung erstreckenden Blattfeder versehen ist, an diesem Eckbolzen mit einem einen Dehnungsschaft mit verringertem Durchmesser aufweisenden Schraubbolzen festgeschraubt ist, der mittels eines Bolzenkopfes an der Oberseite des Winkelteils und eines Haltekörpers unverlierbar dem Winkelteil zugeordnet ist, dadurch gekennzeichnet, daß der Bolzenkopf (15) eine Verengungsstelle (41) aufweist, die durch einen koaxialen Bolzenkopfschaft (42) mit verringertem Durchmesser gebildet ist und die sich in einer Bohrung (13) im Winkelteil (2) zwischen den beiden Enden des Bolzenkopfes befindet, und daß der Haltekörper ein zwischen die beiden Enden des Bolzenkopfes (15) in dessen Verengungsstelle (41) greifender Querstift (43) ist, der in dieser Bohrung (13) am Winkelteil (2) befestigt ist.

2. Kernreaktor-Brennelement nach Anspruch 1, dadurch gekennzeichnet, daß einem zwischen den Bolzenkopf (15) und dem Winkelteil (2) befindlichen Federring (18) eine Aussenkung (22) im Winkelteil (2) zugeordnet ist.

### Claims

1. A nuclear reactor fuel element comprising fuel rods which contain nuclear fuel and which pass through ducts in a head plate and at least part of which is secured in said duct, a fuel element container which contains the fuel rods and is supported by an inner cross-member, located in a corner at its upper end, on a corner pin located on the upper side of the head plate and which, together with an angled component which is matched to the fuel element container and is provided externally on two sides of the fuel element container with a leaf spring which extends in the longitudinal direction of the container, is permanently screwed to this corner pin by a screw-bolt which has an extension shaft of reduced diameter and which is undetachably connected to the angled component by means of a bolt head on the upper side of the angled component and a holding body, characterised in that the bolt head (15) has a constriction (41), which is formed by a coaxial bolt head shaft (42) of reduced diameter and which is located in a bore (13) in the angled component (2), between the two ends of the bolt head, and that the holding body is a cross-pin (43) which engages between the two ends of the bolt head (15) in the constriction (41) thereof and which is attached in this bore (13) to the angled component (2).

2. A nuclear reactor fuel element as claimed in Claim 1, characterised in that a recess (22) in the angled component (2) is provided for a spring washer (18) arranged between the bolt head (15) and the angled component (2).

### Revendications

1. Assemblage combustible de réacteur nucléaire comprenant des crayons combustibles qui contiennent du combustible nucléaire, qui sont guidés dans des passages d'une plaque de tête et dont une partie au moins est fixée à ces passages, ainsi qu'un boîtier-canal dans lequel les crayons combustibles sont disposés, qui repose par une traverse, se trouvant à l'intérieur à un sommet de son extrémité supérieure, sur une pièce taraudée de sommet située sur la face

**0 142 778**

supérieure de la plaque de tête, et qui est boulonné à cet axe de sommet, en même temps qu'une équerre adaptée au boîtier-canal et munie extérieurement sur deux côtés du boîtier-canal respectivement de ressorts à lame s'étendant suivant la direction longitudinale du boîtier-canal, par un boulon comportant un fût de dilatation de diamètre réduit et associé de manière imperdable à l'équerre au moyen d'une tête de boulon sur la face supérieure de l'équerre et d'une pièce de blocage, caractérisé en ce que la tête de boulon (15) comporte un rétrécissement (41) qui est formé par un fût de tête de boulon (42) coaxial, de diamètre réduit et qui se trouve dans un perçage (43) ménagé dans l'équerre (2) entre les deux extrémités de la tête de boulon, et en ce que la pièce de blocage est une tige transversale (43) qui pénètre dans le rétrécissement (41) de la tête de boulon (15) entre les deux extrémités de celle-ci et qui est fixée dans le perçage (13) de l'équerre (2).

2. Assemblage combustible de réacteur nucléaire suivant la revendication 1, caractérisé par un évidement (22) de l'équerre (2) associé à un jonc élastique (18) se trouvant entre la tête de boulon (15) et l'équerre (2).

FIG 1

FIG 2

FIG 3